(19) Europäisches Patentamt
European Patent Office
Office européen des brevets

(11) **EP 3 677 951 A1**

(12) **EUROPEAN PATENT APPLICATION**

(43) Date of publication:
**08.07.2020 Bulletin 2020/28**

(51) Int Cl.:
***G02C 7/04*** *(2006.01)*   ***G02C 7/10*** *(2006.01)*

(21) Application number: **19179372.8**

(22) Date of filing: **11.06.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.01.2019 KR 20190001278**

(71) Applicant: **Min, Nam Gi**
**Gyeongsangnam-do 50897 (KR)**

(72) Inventor: **Min, Nam Gi**
**Gyeongsangnam-do 50897 (KR)**

(74) Representative: **Behr, Wolfgang**
**Lorenz Seidler Gossel**
**Rechtsanwälte Patentanwälte**
**Partnerschaft mbB**
**Widenmayerstraße 23**
**80538 München (DE)**

(54) **COLOR WEAKNESS CONTACT LENS COMPRISING A MICRO-PATTERN HAVING PHOTONIC CRYSTAL STRUCTURE**

(57)     Provided is a contact lens for correction of color weakness including an optical zone, wherein the optical zone includes an acrylic polymer, and a micro-pattern in which a plurality of photonic crystal structures included in the acrylic polymer are dispersed. The contact lens for correction of color weakness is capable of distinguishing colors.

**EP 3 677 951 A1**

**Description**

**CROSS-REFERENCE TO RELATED APPLICATIONS**

This application claims priority under 35 U.S.C. §119 to Korean Patent Application No. 10-2019-0001278, filed on January 04, 2109, in the Korean Intellectual Property Office, the disclosure of which is incorporated herein by reference in its entirety.

**TECHNICAL FIELD**

The following disclosure relates to a contact lens for correction of color weakness, and more particularly, to a contact lens for correction of color weakness capable of reflecting light in a certain wavelength region to correct color weakness.

**BACKGROUND**

Color vision deficiency is a symptom in which one cannot normally identify colors due to congenital or acquired abnormalities of cone cells that recognize the colors, and is generally referred to as "color blindness" or "color weakness", depending on the severity of the symptom. When persons have a normal ability to recognize colors, they can identify the three primary colors (i.e., red, green, and blue) even when these colors are mixed. However, color vision-deficient individuals have problems with at least one function in the red, green, and blue cone cells.

In the past, because color vision-deficient individuals have problems with the capability of recognizing these colors, individuals with red color weakness were provided with the glasses or contact lenses having corrected or improved color vision, by transmitting a large amount of red color and blocking a large amount of green color to enhance the contrast of the two colors, using a method of correcting colors in order to allow the color vision-deficient individuals to recognize the colors in the same manner as normal persons.

However, the glasses or contact lenses using such a conventional optical system have an advantage in that it is possible to adjust the ratio of three primary colors, but have drawbacks in that, because they are configured to be usable for the conditions of outdoor environments, it is impossible to prevent a dramatic decrease in brightness, and thus they may have an adverse effect on refractive power because they do not realize normal color vision and may make things look darker due to the deficiency in quantity of light.

As one example of technology for amending the color vision deficiency, one solution is disclosed in U.S. Patent Nos. 3,586,423, 3,701,590, and 4,300,819. Specifically, although the technology guarantees the color vision-deficient individuals to have an ability to roughly distinguish some colors by wearing a color lens on one eye and a transparent lens on the other eye, the technology does not provide any improvement to people suffering from the color vision deficiency.

That is, because these solutions are not suitable for solving discomfort caused by the symptoms of color vision deficiency in a large number of people with abnormal color vision deficiency, there is a need for methods for correction of color vision which allow the color vision-deficient individuals to easily recognize these colors with a normal color sense.

**SUMMARY**

An embodiment of the present invention is directed to providing a contact lens for correction of color weakness capable of clearly identifying colors by reflecting light with certain wavelengths at which it is difficult to distinguish the three colors (i.e., red, green, and blue).

Another embodiment of the present invention is directed to providing a contact lens for correction of color weakness, which is not bent or deformed during swelling of the lens.

In one general aspect, a contact lens for correction of color weakness according to the present invention includes an optical zone, wherein the optical zone includes an acrylic copolymer, and a micro-pattern in which one or plurality of photonic crystal structures included in the acrylic copolymer are dispersed.

The photonic crystal structures may reflect visible rays in a wavelength region of 480 nm to 520 nm.

The photonic crystal structures may reflect visible rays in a wavelength region of 560 nm to 600 nm.

The photonic crystal structures may reflect visible rays in a wavelength region of 630 nm to 670 nm.

The contact lens for correction of color weakness may include a soft contact lens or a hard contact lens.

The soft contact lens may include a hydrogel cross-linked from an acrylic polymer.

The photonic crystal structures may include opal or inverse opal structures.

The photonic crystal structures may be in a lamellar or hemispherical shape having a thickness of 1 $\mu$m to 50 $\mu$m.

The photonic crystal structures may have substantially spherical particles or spherical pores regularly arranged therein, and a wall material of the photonic crystal structures may include a polymer having a water content of 0 to 30%.

The wall material of the photonic crystal structures may include a cross-linked polymer which is not swellable in water.

The polymer of the wall material may be prepared by polymerizing a monomer composition including 50 mol% or more of a multifunctional monomer containing two or more polymerizable functional groups, based on the total mole of the monomer in the monomer composition.

The photonic crystal structures may be derived from colloidal photonic crystal structures in which crystals are spontaneously formed by a repulsive force acting between colloidal particles and a solvent.

In another general aspect, a contact lens for correction of color weakness according to the present invention includes an optical zone through which a contact lens wearer's line of vision passes and which includes one or plurality of photonic crystal structures; and an annular peripheral zone surrounding the optical zone, wherein the one or plurality of photonic crystal structures are encapsulated with a lens material.

The lens material may include an acrylic polymer.

The photonic crystal structures may have an in-plane long-axis diameter of 10 $\mu$m to 1,000 $\mu$m, and the plurality of photonic crystal structures may have the same or different long-axis diameters.

The photonic crystal structures may have substantially spherical particles or spherical pores regularly arranged therein, and the spherical particles or spherical pores may have a diameter of 50 to 500 nm.

A gap between the photonic crystal structures may be in a range of 10 $\mu$m to 500 $\mu$m.

In still another general aspect, a method of preparing a hard contact lens for correction of color weakness according to the present invention includes: (a) forming a groove in one surface of a base material for hard contact lenses; (b) filling the groove with a colloidal dispersion including colloidal particles and a multifunctional monomer; and (c) curing the colloidal dispersion to form photonic crystal structures.

In yet another general aspect, a method of preparing a soft contact lens for correction of color weakness according to the present invention includes: (A) preparing a colloidal dispersion including colloidal particles and a multifunctional monomer; (B) forming regularly arranged colloidal crystals from the colloidal dispersion; (C) curing the colloidal crystals to prepare photonic crystal structures; (D) positioning the photonic crystal structures in a central region of a mold and filling the mold with a polymerizable composition; and (E) curing the polymerizable composition so that the photonic crystal structures are encapsulated into an optical zone, which is a lens center, using a lens material.

## BRIEF DESCRIPTION OF THE DRAWINGS

FIG. 1 is a diagram showing a stereoscopic configuration of a contact lens for correction of color weakness according to the present invention.

FIG. 2 is a top view of the contact lens for correction of color weakness shown in FIG. 1.

FIG. 3 is a cross-sectional view taken along line III-III shown in FIG. 2.

FIG. 4 is an enlarged diagram showing photonic crystal structures shown in FIG. 3.

FIG. 5 is a diagram showing a stereoscopic layout configuration of spherical particles or spherical pores included in the photonic crystal structures shown in FIG. 3.

## DETAILED DESCRIPTION OF EMBODIMENTS

Hereinafter, the present invention will be described in detail with reference to the accompanying drawings. The drawings presented hereinbelow are shown as one example to sufficiently provide the scope of the present invention to those skilled in the art. Therefore, it should be understood that the present invention may be embodied in various forms, but is not intended to be limiting in the drawings presented hereinbelow. In this case, the drawings presented hereinbelow may be shown in an exaggerated manner to make the scope of the present invention more clearly apparent.

Unless otherwise defined, all technical and scientific terms used in the specification of the present invention have the same meaning as commonly understood by one of ordinary skill in the art to which the present invention pertains. In the following description and the accompanying drawings, a description of known functions and configurations, which unnecessarily obscure the subject matter of the present invention, will be omitted.

Also, the singular forms "a," "an," and "the" used in the specification of the present invention refer to those including plural referents unless the context clearly dictates otherwise.

In addition, the units used without any particular comments in the specification of the present invention are based on weight. For example, the units of % or percentage refer to a percent (%) by weight or weight percentage.

Also, unless otherwise defined in this specification of the present invention, a molecular weight of a polymer refers to a weight average molecular weight of the polymer.

Additionally, unless otherwise defined in this specification of the present invention, an average particle size of particles refers to a $D_{50}$ value obtained using a particle size analyzer.

In addition, a numerical range used in this specification of the present invention is meant to include its upper and lower limits and all possible combinations of all values falling within these limits, increments logically derived from the shapes and widths of defined ranges, all double-defined values, and upper and lower limits of the numerical ranges defined in different types. As one example, it should be understood that, when the molecular weight is defined in a range of 100 to 10,000, particularly in a range of 500 to 5,000, a numerical range of 500 to 10,000 or 100 to 5,000 is also described in this specification of the present invention. Unless otherwise particularly defined in this specification of the present invention, all values falling out of this numerical range that may occur due to the rounding off of the experimental errors or values also fall within the defined numerical ranges.

Also, in the specification of the present invention, the expression "comprise(s)" is intended to be open-ended transitional phrases having an equivalent meaning with "include(s)," "have," "has," "contain(s)," and "is (are) characterized by," and does not exclude elements, materials, or steps, all of which are not further recited herein. Also, the expression "consist(s) essentially of" means that one element, material or step, which is not recited in combination with the other elements, materials or steps, may be present at an amount having no unacceptably significant influence on at least one basic and novel technical idea of the invention. Also, the expression "consist(s) of" means the presence of only the elements, materials or steps defined herein.

In addition, in this specification of the present invention, a hydrogel refers to a solid material that includes a hydrophilic polymer having a swelling property using water as a solvent. Also, the hydrogel refers to a substance that does not exhibit fluidity because it is not substantially deformed due to its high viscosity in a normal state or has three-dimensionally (3D) physical or chemical cross-linking bonds.

Further, in this specification of the present invention, the term "polymer" refers to a product of polymerization of one or more monomers, and may be used to have the same meaning as described in the "high-molecular compound." In this case, unless otherwise defined, the polymer is meant to be inclusive of homopolymers as well as interpolymers, copolymers, terpolymers, and the like, and also includes blends and modifications of any of the foregoing, including block, graft, addition or condensation forms of the polymers.

A contact lens for correction of color weakness according to the present invention is characterized in that the contact lens includes an optical zone, wherein the optical zone includes an acrylic polymer, and a micro-pattern in which one or plurality of photonic crystal structures included in the acrylic polymer are dispersed.

The acrylic polymer includes a polymer or copolymer including an acrylic group. The acrylic polymer is used to form a lens, and materials known in the related art may be used without any limitation.

The acrylic polymer refers to a material of the contact lens, and may be included as a matrix forming an optical zone and an annular peripheral zone of the lens.

According to one embodiment of the present invention, the contact lens for correction of color weakness may include a soft contact lens or a hard contact lens.

When the contact lens for correction of color weakness is a hard contact lens, the acrylic polymer may be used without any limitation as long as the acrylic polymer is a material known in the related art for use in the hard contact lens. As one example, the acrylic polymer may be a hydrophobic acrylic polymer. When the hard contact lens is prepared as described above, the hard contact has remarkable optical properties, and thus is more preferably used as the contact lens for correction of color weakness.

When the contact lens for correction of color weakness is a soft contact lens, the acrylic polymer may be provided as a hydrogel cross-linked from an acrylic polymer. The hydrogel may have an internetworking configuration formed by cross-linking a plurality of main polymer chains with each other.

Hydrogels known in the related art may be used as the hydrogel without any limitation. One example of the hydrogel may be an acrylic hydrogel. Specifically, the acrylic hydrogel may be a non-silicone-acrylic hydrogel or a silicone-acrylic hydrogel, preferably a hydrophilic acrylic hydrogel. Materials known in the related art may be used as a monomer or macromer forming the hydrogel without any limitation.

The acrylic polymer may be preferably substantially transparent, and may have a permeability in a visible light range of 90% or more, more particularly a permeability of 95% or more and 100% or less, as determined at a thickness of 100 $\mu$m.

The micro-pattern means that one or plurality of photonic crystal structures are formed so that the one or plurality of photonic crystal structures are included and dispersed in the acrylic polymer. The photonic crystal structures may be encapsulated into the acrylic polymer in the form of separate particles. When the plurality of photonic crystal structures are dispersed in the acrylic polymer, each of the particles in the photonic crystal structures may be spaced apart at a predetermined distance from each other to form a dispersed phase in the acrylic polymer.

For correction of color weakness, the micro-pattern is formed so that the one or plurality of photonic crystal structures are included and dispersed in the optical zone through which a line of vision passes.

According to one specific embodiment, when the micro-pattern consists of one photonic crystal structure, the entire optical zone is meant to consist of one photonic crystal structure. Most regions of the optical zone through which light passes as described above may have an excellent effect of correcting color weakness by allowing the light to pass through the photonic crystal structures.

As another example, when the micro-pattern includes the plurality of dispersed photonic crystal structures, light incident on the contact lens may pass through the plurality of photonic crystal structures, and the acrylic polymer present between the photonic crystal structures. As such, when the photonic crystal structures are spaced apart at a predetermined distance from each other to form a dispersed phase in the acrylic polymer, a transmission rate of light reaching the retina may be improved, and an effect of correcting color weakness may be realized as well.

In the case of the hard contact lens, a shape of the contact lens is not bent or deformed due to hydration or swelling of the acrylic polymer even when one entire optical zone consists of the photonic crystal structures.

In the case of the soft contact lens, a shape of the contact lens may be bent or deformed because a water content of the photonic crystal structures is different from a water content of the acrylic polymer, which is a material of the contact lens, upon the hydration or swelling of the acrylic polymer. However, when the micro-pattern includes the plurality of dispersed photonic crystal structures, local stress may be released according to a hydration or swelling process of the contact lens, thereby preventing the bending or deformation at the shape of the contact lens.

The 20 or more spherical particles in the photonic crystal structures may be included in one contact lens for correction of color weakness. Particularly, the number of the spherical particles may be greater than or equal to 100, 200, 500, or 1,000, and may be less than or equal to 2,000, but this is just one embodiment, and the present invention is not limited thereto. Also, the photonic crystal structures may be included in one contact lens for correction of color weakness at a content of 0.1% by weight to 99% by weight, preferably 0.1 to 50% by weight, and more preferably 0.1 to 30% by weight, based on the total dry weight of the contact lens for correction of color weakness, but the present invention is not limited thereto.

Because individuals with color weakness have difficulties in clearly distinguishing three colors (i.e., red, green, and blue), the contact lens for correction of color weakness according to one embodiment of the present invention may be prepared to reflect visible rays in a certain wavelength region in order to allow the individuals to easily recognize these colors with a normal color sense.

The photonic crystal structures according to one embodiment of the present invention may reflect visible rays in a wavelength region of 480 nm to 520 nm. When such visible rays in this wavelength region are reflected, the photonic crystal structures may clearly distinguish between blue and green colors, and thus are suitable for use in cyan color weakness. When the size of the spherical particles or spherical pores in the photonic crystal structures is in a range of 120 nm to 155 nm, preferably 130 nm to 155 nm, the photonic crystal structures may reflect the visible rays in this wavelength region, resulting in improved distinguishability of certain colors.

The photonic crystal structures according to one embodiment of the present invention may reflect visible rays in a wavelength region of 560 nm to 600 nm. When such visible rays in this wavelength region are reflected, the photonic crystal structures may clearly distinguish between green and red colors, and thus are suitable for use in red-green color weakness. When the size of the spherical particles or spherical pores in the photonic crystal structures is in a range of 156 nm to 177 nm, and preferably 158 nm to 177 nm, the photonic crystal structures may reflect visible rays in this wavelength region, resulting in improved distinguishability of certain colors.

The photonic crystal structures according to one embodiment of the present invention may reflect visible rays in a wavelength region of 630 nm to 670 nm. When such visible rays in this wavelength region are reflected, the photonic crystal structures may clearly distinguish a red color, and thus are suitable for use in red color weakness. When the size of the spherical particles or spherical pores in the photonic crystal structures is in a range of 178 nm to 210 nm, preferably 180 nm to 205 nm, the photonic crystal structures may reflect visible rays in this wavelength region, resulting in improved distinguishability of certain colors.

Most preferably, the photonic crystal structures according to one embodiment of the present invention may reflect all types of visible rays in three wavelength regions of 480 nm to 520 nm, 560 nm to 600 nm, and 630 nm to 670 nm. When the visible rays in the three wavelength regions are reflected as described above, it is desirable because a white color may be prevented from looking like other colors when one sees a white background, and the three colors (i.e., red, green, and blue) may be generally clearly distinguished for the unsatisfactory color distinguishability.

The photonic crystal structures may be opal or inverse opal structures, and the opal or inverse opal structures may mean that one or plurality of spherical particles or spherical pores are arranged in a 3D long-range order in the structures. Preferably, the photonic crystal structures may be opal structures.

The photonic crystal structures may have a photonic band gap by periodically changing a dielectric constant at substantially the half of the wavelengths of light. Photons having a level of energy corresponding to the photonic band gap may not propagate into photonic crystals due to the very low state density of the photonic crystals. When the photonic band gap is present in a certain region of visible rays as described above, the photonic crystal structures may reflect these visible rays to clearly distinguish between certain colors. When the colloidal particles are regularly arranged, the photonic crystal structures may be formed, the photonic crystal structures may reflect light in a certain wavelength region to distinguish the three colors (i.e., red, green, and blue), and the colors corresponding to a band gap of the photonic crystals may be reflected in the certain wavelength region. In this case, the certain wavelength region is a wavelength region at which it is difficult to distinguish two or more colors when the colors are mixed. A reflected wavelength region of the colloidal photonic crystal structures may be adjusted by colloids, an index of refraction of a background material, a crystal structure, the size of particles, a gap between the particles, and the like. Preferably, when the photonic crystal structures are formed as the opal structures, the optical properties and distinguishability of colors may be further improved by minimizing a difference in an index of refraction between the spherical particles.

The opal structure may refer to a crystal-phase structure obtained by regularly arranging polymer or inorganic colloidal particles, specifically a face-centered cubic (FCC) crystal-phase structure or a non-close-packed FCC crystal-phase structure. The opal structure may, for example, be prepared by a method such as direct printing, photolithography, stamping, solvent evaporation, or sedimentation. In one non-limiting example of the solvent evaporation method, when colloidal particles having a particle size of 50 nm to 500 nm are dispersed in a medium such as water or alcohol, and the medium is then slowly evaporated, the colloidal particles may be packed in the closest configuration due to a capillary force exerted between the particles, and the crystal-phase structure may be obtained accordingly. In this case, the colloidal particles may be preferably monodispersed colloidal particles, and a particle size distribution of the colloidal particles may have a relative standard deviation of 10% or less, or preferably a relative standard deviation of 0.1% to 5%.

The inverse opal structure refers to a structure having a number of pores in a wall material, wherein the structure is obtained by filling an empty space of the opal structure with a wall material, followed by etching the polymer or inorganic colloidal particles forming the opal structure, dissolving the colloidal particles in a solvent, or removing the colloidal particles by means of a thermal treatment. When light incident on the inverse opal structure has wavelengths in a band bap of the inverse opal structure, the light does not pass through the inverse opal structure, and light with certain wavelengths may be selectively reflected to distinguish the colors.

Based on the total volume of the photonic crystal structures, a volume fraction of the colloidal particles or a volume fraction of the pores is sufficient, and is not particularly limited as long as the colloidal particles and pores have a level of volume fraction to reflect light in a certain wavelength region through the scattering of light. For example, the volume fraction may be greater than or equal to 20%, 40%, 50%, 60%, or 70%, and may be less than or equal to 80%.

The photonic crystal structures may be in a lamellar or hemispherical shape having a thickness of 1 $\mu$m to 50 $\mu$m, preferably a thickness of 2 $\mu$m to 40 $\mu$m, and more preferably a thickness of 2 $\mu$m to 20 $\mu$m.

When the spherical particles or spherical pores are sufficiently distributed in a 3D arrangement manner within this numerical range, the photonic crystal structures may reflect only the light in a certain wavelength region to exhibit excellent color weakness correction characteristics, and a process of preparing the colloidal particles to form the pores may also be facilitated upon preparation of the inverse opal structure. More specifically, for the purpose of good expression of correction of color weakness in the inverse opal structure, the pores should be stacked in five or more layers in a direction of depth (d2) of the photonic crystal structures. However, when contact lenses 10 are worn over human eyes, tears are allowed to flow into pores 34 included in the photonic crystal structures. In this case, the pores 34 may be preferably stacked in ten or more layers in a direction of depth (d2) of the photonic crystal structures 30, depending on a difference in index of refraction between the air and water.

When the plurality of photonic crystal structures form a micro-pattern, the photonic crystal structures may have an in-plane long-axis diameter of 10 $\mu$m to 1000 $\mu$m, preferably 20 $\mu$m to 500 $\mu$m, and more preferably 50 $\mu$m to 200 $\mu$m. The plurality of photonic crystal structures may have the same or different long-axis diameters. It is desirable that, when the photonic crystal structures have the thickness and the in-plane long-axis diameter, the shape of the contact lens is not bent or deformed even when the photonic crystal structures have a non-swelling property in water during the hydration or swelling of the acrylic polymer serving as a material of the soft contact lens.

More specifically, a ratio of the thickness of the photonic crystal structures with respect to the in-plane long-axis diameter thereof may be in a range of 1 to 100, preferably 2 to 50, and more preferably 5 to 20, and the photonic crystal structures may be in a lamellar shape.

According to one embodiment of the contact lens for correction of color weakness according to the present invention, the photonic crystal structures may reflect light in a certain visible wavelength region to clearly identify the colors because the photonic crystal structures include an opal or inverse opal structure. The contact lens for correction of color weakness may reflect light in a certain visible wavelength region to distinguish colors without using a coloring agent such as a pigment or a dye, unlike a conventional way to wear a color contact lens including the coloring agent on one eye to realize an ability to distinguish the colors. Therefore, the color contact lens has an advantage in that an additional printing process is not required even when the contact lens does not include the coloring agent.

One embodiment of the contact lens for correction of color weakness according to the present invention includes an optical zone through which a contact lens wearer's line of vision passes and which includes one or plurality of photonic crystal structures; and an annular peripheral zone surrounding the optical zone.

Because a user's line of vision passes through the optical zone, the plurality of photonic crystal structures may be positioned for correction of color weakness so that the photonic crystal structures can be dispersed in the optical zone. Because the annular peripheral zone is a zone through which a use's line of vision does not pass, only the acrylic polymer is positioned in the annular peripheral zone, or may further include a color pattern to realize an aesthetic effect. In fact, the annular peripheral zone may in fact hardly exist, or may exist with a very small area of 10% or less, or 5% or less, compared to the area of the optical zone.

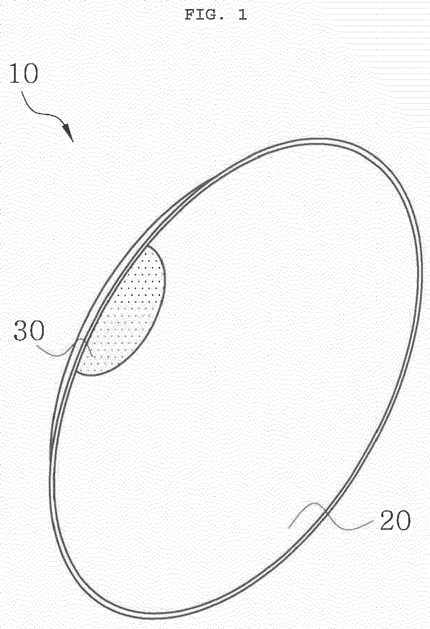

Referring to FIG. 1, the contact lens according to one embodiment of the present invention may be in a hemispherical shape. In this case, because a lens wearer's line of vision passes through the optical zone, the photonic crystal structures are positioned for the purpose of correction of color weakness, and have a structure in which the annular peripheral zone surrounds the optical zone.

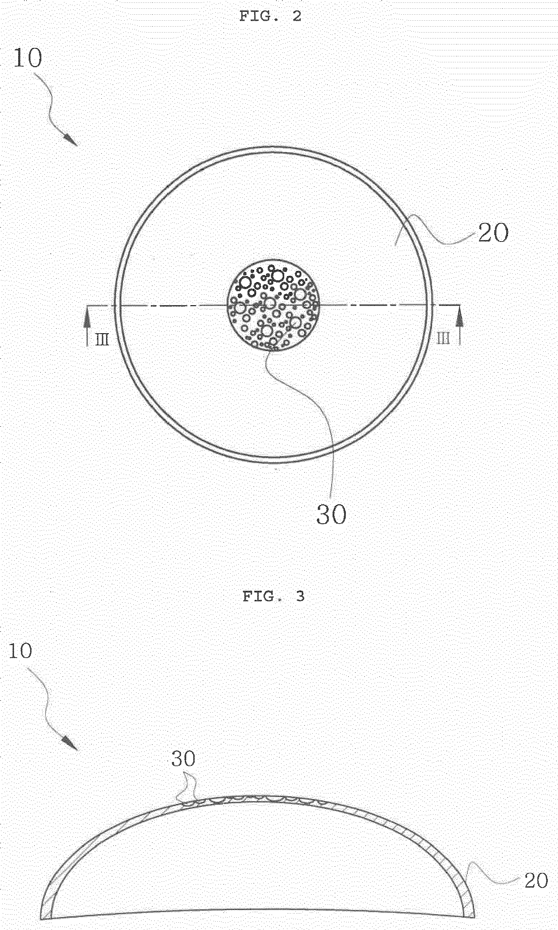

FIG. 2 shows a top view of the contact lens according to one embodiment of the present invention, and shows that the plurality of photonic crystal structures form a micro-pattern densely positioned in the optical zone. The photonic crystal structures may be disposed to cover the whole pupil, and the annular peripheral zone may include only an acrylic polymer spanning from the micro-pattern of the optical zone to the end of the lens.

The photonic crystal structure may be physically or chemically encapsulated into the acrylic polymer. When the photonic crystal structures are physically encapsulated, the photonic crystal structures may be mixed and polymerized with a polymerizable composition forming an acrylic polymer in a mold, and then encapsulated into the acrylic polymer. When the photonic crystal structures are chemically encapsulated, a reactive functional group positioned on surfaces of the particles in the photonic crystal structures may react with the polymerizable composition forming an acrylic polymer in the mold, and then may be more stably encapsulated into the acrylic polymer. Also, the photonic crystal structures according to one embodiment of the present invention may be positioned in the acrylic polymer by forming a groove in the acrylic polymer and filling the groove with the photonic crystal structures.

FIG. 3 shows a cross-sectional view of the contact lens according to one embodiment of the present invention, and shows that a plurality of photonic crystal structures are encapsulated into an acrylic polymer in the form of separate particles. In this case, the respective photonic crystal structures are spaced apart at a predetermined distance from each other to form a dispersed phase in the acrylic polymer, thereby forming a micro-pattern.

According to one specific embodiment, the photonic crystal structures may be first disposed at a certain position in the mold, and the mold may be filled with a polymerizable composition forming an acrylic polymer. Then, the photonic crystal structures may be polymerized and encapsulated into the acrylic polymer. Optionally, the photonic crystal structures may be positioned in the acrylic polymer by filling the groove formed in the acrylic polymer. In this case, after the polymerization is completed, the one or plurality of photonic crystal structures disposed at a certain position may be transferred into the acrylic polymer to form a micro-pattern of the contact lens. The acrylic polymer whose polymerization is completed refers to a contact lens including the micro-pattern, and the contact lens may be in a hemispherical shape. The micro-pattern may be positioned so that the micro-pattern can be encapsulated into the hemispherical contact lens, and may be positioned towards a convex surface of the contact lens.

According to one embodiment of the present invention, a zone in which the photonic crystal structures are positioned in the lens is not covered with the acrylic polymer, and thus the photonic crystal structures are exposed through only a surface of the contact lens.

According to another embodiment, a zone in which the photonic crystal structures are positioned in the lens is covered with the acrylic polymer to include a transparent acrylic polymer-coated layer on the photonic crystal structures. More specifically, a transparent coated layer may be formed on the micro-pattern by applying a layer of polymerizable composition solution forming an acrylic polymer onto a surface of the contact lens for correction of color weakness, which includes a micro-pattern in which the photonic crystal structures are dispersed, and polymerizing the layer of polymerizable composition solution. The transparent acrylic polymer-coated layer may prevent the photonic crystal structures from being directly exposed towards a convex surface of the contact lens, thereby improving the user's wearing sensation. Also, because the photonic crystal structures have a non-swelling property such as low water content, a moisture content of the lens surface may be reduced when the photonic crystal structures are directly exposed outwards a convex surface of the contact lens, thereby causing discomfort when worn for a long period of time, and causing problems such as fouling caused by adsorption of proteins. However, when the transparent hydrogel-coated layer is formed on the photonic crystal structures, an increase in moisture content of the lens surface may be promoted, thereby significantly lowering the side effects, such as eye redness, a drying sensation, and a foreign body sensation, even when worn for a long period of time.

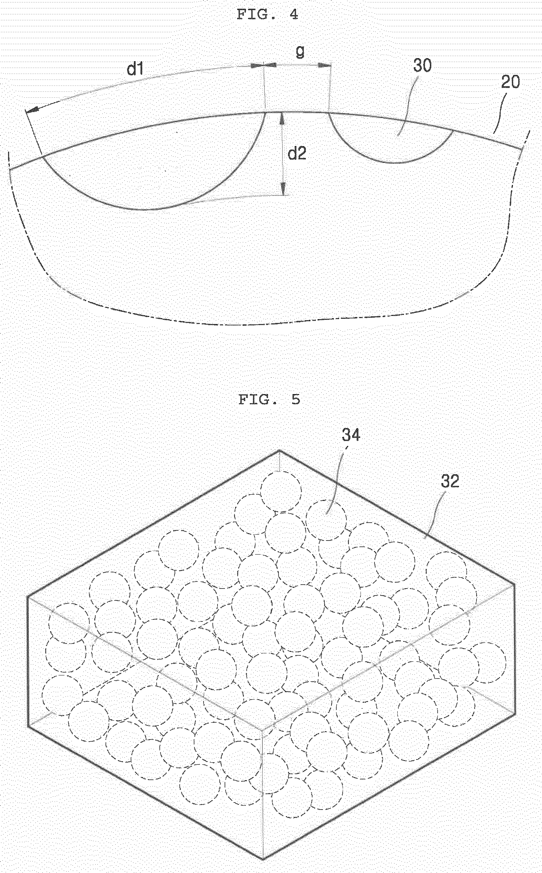

FIG. 4 shows an enlarged diagram showing some of the photonic crystal structures in the micro-pattern shown in FIG. 3, and shows that the respective photonic crystal structures may have the same or different long-axis diameters. In this case, the respective photonic crystal structures may have the same or different thicknesses.

Each of the photonic crystal structures may be in various shapes such as a lamellar shape, a hemispherical shape, and the like, and is not limited to certain shapes. For example, each of the photonic crystal structures may include hemispherical shape as shown in FIG. 4. A gap g between the neighboring photonic crystal structures may be in a range of 10 μm to 500 μm, preferably in a range of 50 μm to 200 μm. When the acrylic polymer is hydrated or swollen within this numerical range, the shape of the contact lens may not be bent or deformed even when there is a difference in water content between the photonic crystal structures and the acrylic polymer serving as a material of the contact lens. Also, the photonic crystal structures have an advantage in that, when a gap between the respective photonic crystal structures is observed with the naked eye, it is impossible to identify the gap between the respective photonic crystal structures with the naked eye, but the micro-pattern consisting of the plurality of photonic crystal structures may be recognized as one pattern.

According to one embodiment of the contact lens for correction of color weakness according to the present invention, the photonic crystal structures may have substantially spherical particles or spherical pores regularly arranged therein, and a wall material of the photonic crystal structures may include a polymer having a water content of 0 to 30%.

In this specification of the present invention, "substantially spherical shape" refers to roughly a complete spherical shape, that is, a spherical shape in which a difference between the maximum diameter and the minimum diameter is less than 10%, as determined on any cross section of the spherical shape, but the present invention is not limited thereto. In the initial state, the pores may also be in a distorted spherical shape.

A photonic crystal structure having substantially spherical particles regularly arranged therein refers to an opal structure, and the particles may include polymer particles or inorganic particles. One non-limiting embodiment of such particles may include styrenebutadiene rubber (SBR) particles, polybutadiene rubber particles, nitrile rubber particles, acrylic rubber particles, acrylonitrile-butadiene-styrene (ABS) particles, polyvinylidene fluoride particles, vinylacetate-ethylene copolymer particles, polystyrene (PS) particles, polymethylmethacrylate (PMMA) particles, or silica particles, but this is just one embodiment, and the present invention is not limited thereto.

The polymer particles are not particularly limited as long as stable particles can be produced by emulsion polymerization or suspension polymerization. An example of a method of preparing the substantially spherical inorganic particles may be found in US 4775520 A. As a method of preparing the substantially spherical monodispersed polymer particles or inorganic particles, various preparation methods are known in the related art. In this case, the known preparation methods may be used without any limitation, and thus a detailed description of the specific preparation methods will be omitted.

An empty space of the opal structure may be filled with a wall material, and thus stability of the opal structure may be improved without any destruction of crystallinity in which the spherical particles are regularly arranged through the wall material.

The photonic crystal structures having the substantially spherical pores regularly arranged therein refers to an inverse opal structure, and the inverse opal structure may be prepared by filling an empty space of the opal structure with a wall material, followed by etching the polymer or inorganic colloidal particles forming the opal structure, dissolving the colloidal particles in a solvent, or removing the colloidal particles by means of a thermal treatment.

The wall material of the photonic crystal structures may include a polymer having a water content of 0 to 30%. The water content of the wall material is particularly in a range of 0 to 20%, more particularly in a range of 0 to 10%. The polymer included in the wall material may be a polymer having a non-swelling property in water, preferably a non-swelling cross-linked polymer.

The polymer included in the wall material of the photonic crystal structures may be prepared by polymerizing a monomer composition including a multifunctional monomer containing two or more polymerizable functional groups. The multifunctional monomer may be a multifunctional vinyl-based monomer or a multifunctional acrylic monomer, and may preferably include 50 mol% or more, particularly 70 mol% or more, and more particularly 80 mol% or more and 100mol% or less, of the multifunctional monomer, based on the total moles of monomers in the monomer composition.

The number of the polymerizable functional groups in the multifunctional monomer may be in a range of 2 to 10, particularly in a range of 2 to 8, and more particularly in a range of 2 to 6, but the present invention is not limited thereto.

Specific examples of the multifunctional acrylic monomer that may be used herein include one or combinations of two or more selected from the group consisting of glycerin-(ethylene oxide)$_3$ trimethacrylate, pentaerythritol-(ethylene oxide)$_4$ tetramethacrylate, ethoxylated trimethylolpropane triacrylate (ETPTA), trimethylolpropane triacrylate, pentaerythritol triacrylate, ditrimethylol propane tetraacrylate, and tetramethylol methane tetraacrylate, but this is just one embodiment, and the present invention is not limited thereto.

According to one embodiment of the contact lens for correction of color weakness according to the present invention, the photonic crystal structures may be derived from colloidal photonic crystal structures in which crystals are spontaneously formed by a repulsive force acting between the colloidal particles and the solvent. The photonic crystal structures may be advantageous for a preparation process in that the photonic crystal structures obtained through a self-assembly process of colloids may be prepared with low expense by regularly arranging the colloidal particles on a large area.

Also, the contact lens for correction of color weakness according to the present invention is characterized in that the one or plurality of photonic crystal structures are encapsulated with the lens material.

The lens material may be an acrylic polymer, and may be included as a matrix forming an optical zone and a peripheral zone of a lens. In this case, the photonic crystal structures may be physically or chemically encapsulated into the acrylic polymer so that the acrylic polymer can be stably positioned in the contact lens without detaching the photonic crystal structures from the contact lens.

According to one embodiment of the present invention, the contact lens for correction of color weakness may be a soft contact lens or a hard contact lens.

When the contact lens for correction of color weakness is a hard contact lens, materials used for the hard contact lens and known in the related art may be used as the lens material without any limitation. One example of the lens material may be a hydrophobic acrylic polymer such as polymethylmethacrylate, and the like. When the hard contact lens is prepared as described above, the hard contact lens is more preferably used as the contact lens for correction of color weakness because the hard contact lens may have remarkable optical properties.

When the contact lens for correction of color weakness is a soft contact lens, the acrylic polymer may be a hydrogel cross-linked from the acrylic polymer. The hydrogel may have an internetworking configuration formed by cross-linking a plurality of main polymer chains with each other.

Hydrogels known in the related art may be used as the hydrogel without any limitation, and the hydrogel may be prepared by polymerizing a polymerizable composition including one or more monomers containing a polymerizable functional group.

The acrylic hydrogel may be prepared by cross-linking a polymerizable composition including an acrylic monomer, an initiator, and a cross-linking agent. Preferably, the acrylic hydrogel may be a non-silicone-acrylic hydrogel or a silicone-acrylic hydrogel. The silicone-acrylic hydrogel may be prepared by cross-linking a polymerizable composition including a silicone-based macromer, an acrylic monomer, an initiator, and a cross-linking agent. The silicone-based macromere may be a monofunctional or difunctional monomer including polydimethylsiloxane (PDMS) at the main chain thereof and containing a polymerizable functional group at the end thereof.

The polymerizable composition for preparing an acrylic polymer preferably has a viscosity of 10 to 20,000 cps, and more preferably a viscosity of 100 to 15,000 cps, as determined at 25°C. When the soft contact lens is prepared within this viscosity range, it is desirable that the polymerizable composition may penetrate into surfaces of the photonic crystal structures during injection into the mold so that the photonic crystal structures can be effectively encapsulated into the hydrogel.

The acrylic monomer included in the polymerizable composition for preparing an acrylic polymer may include one or more selected from a hydrophilic monomer and a hydrophobic monomer. The hydrophilic monomer and the hydrophobic monomer are not particularly limited, and hydrophilic and the hydrophobic monomers commonly used in the related art may be used. For example, a hydrophilic acrylic monomer or a hydrophobic acrylic monomer may be used.

The hydrophilic monomer may be a hydrophilic acrylic monomer. Specific examples of the hydrophilic monomer may include one or more selected from C1-C15 hydroxyalkyl methacrylates substituted with 1 to 3 hydroxyl groups, C1-C15 hydroxyalkyl acrylates substituted with 1 to 3 hydroxyl groups, acrylamides, vinyl pyrrolidone, glycerol methacrylate, acrylic acid, and methacrylic acid. More specific examples of the hydrophilic acrylic monomer may include one or more selected from 2-hydroxyethyl methacrylate (HEMA), N,N-dimethyl acrylamide (DMA), N-vinyl pyrrolidone (NVP), glycerol monomethacrylate (GMMA), and methacrylic acid (MAA).

In addition to the hydrophilic acrylic monomers, the hydrophilic monomer may also be used together with a hydrophobic silicone-acrylic monomer, when necessary. In this case, the hydrophilic silicone-acrylic monomer is not particularly limited, and hydrophilic silicone-acrylic monomers commonly used in the related art may be used. Specific examples of the hydrophilic silicone-based acrylic monomer may include one or more selected from tris(3-methacryloxypropyl)silane, 2-(trimethylsilyloxy)ethylmethacrylate, 3-tris(trimethylsilyloxy)silylpropyl methacrylate, 3-methacryloxypropyl tris(trimethylsilyl)silane (MPTS), 3-methacryloxy-2-(hydroxypropyloxy)propyl bis(trimethylsiloxy)methylsilane, and 4-methacryloxybutyl-terminated polydimethylsiloxane.

The hydrophobic monomer may be a hydrophobic acrylic monomer, and an alkyl acrylate monomer and an alkyl methacrylate monomer may be used as the hydrophobic monomer. More specific examples of the hydrophobic monomer may include one or more selected from methyl acrylate, methyl methacrylate, ethyl acrylate, ethyl methacrylate, n-propyl acrylate, n-propyl methacrylate, n-butyl acrylate, n-butyl methacrylate, stearyl acrylate, stearyl methacrylate, and the like. Also, monomers having a high glass transition temperature ($T_g$), for example, cyclohexyl methacrylate, tert-butyl methacrylate, isobornyl methacrylate, and a mixture thereof may also be used to enhance mechanical properties of the contact lens.

The polymerizable monomer may be included at a content of 40 to 100% by weight, and more particularly a content of 50 to 90% by weight, based on the total weight of the polymerizable composition, but the present invention is not limited thereto.

Also, the polymerizable monomer may be included at a content of 20 to 99% by weight, particularly a content of 30 to 90% by weight, and particularly a content of 40 to 80% by weight, based on the total weight of the polymerizable composition.

The cross-linking agent may be a vinyl-based or acrylic compound having two or more polymerizable functional groups. For example, one or more selected from ethylene glycol dimethacrylate (EGDMA), diethylene glycol methacrylate (DGMA), divinylbenzene, and trimethylolpropane trimethacrylate (TMPTMA) may be used. Also, the cross-linking agent may be preferably present in the polymerizable composition at a content of 0.005 to 5% by weight, and more particularly a content of 0.010 to 3% by weight.

The initiator is used to polymerize the polymerizable composition, and a thermal initiator or a photoinitiator may be selected herein. For example, one or more selected from azodiisobutyronitrile (AIBN), benzoin methyl ether (BME), 2,5-dimethyl-2,5-di-(2-ethylhexanoylperoxy)hexane and dimethoxyphenyl acetophenone (DMPA), Irgacure 2100, and 2-hydroxy-2-methyl-1-phenyl-1-propanone may be used as the initiator, but the present invention is not limited thereto. The initiator may be present in the polymerizable composition at a content of 0.005 to 2.000% by weight, and more particularly a content of 0.010 to 1.500% by weight, but the present invention is not limited thereto.

The contact lens for correction of color weakness may have a thickness of 10 μm to 150 μm. In this case, the thickness of the contact lens may vary depending on the zones. For example, the contact lens may become thinner from the optical zone towards the end of the annular peripheral zone. The optical zone in which the photonic crystal structures are positioned may have a thickness of 10 μm to 100 μm, particularly a thickness of 15 μm to 70 μm, and more particularly a thickness of 20 μm to 50 μm. To stably encapsulate the photonic crystal structures into the contact lens, the thickness of the optical zone is characterized in that it is higher than the thickness of the photonic crystal structures.

According to one embodiment of the contact lens for correction of color weakness according to the present invention, the one or plurality of photonic crystal structures may be dispersed in the optical zone to form a micro-pattern. When the micro-pattern which the plurality of photonic crystal structures are dispersed to form is observed with the naked eye, a gap between the respective photonic crystal structures is not identified with the naked eye, and may be identified as one pattern consisting of the plurality of photonic crystal structures.

According to one embodiment of the contact lens for correction of color weakness according to the present invention, when the lens material is a soft contact lens, the water content of the lens material may be characterized in that it is higher than the water content of the photonic crystal structures.

When the lens material is a soft contact lens, the lens material may be a hydrogel, and the hydrogel preferably has a high water content in order to exhibit a high wearing sensation without any side effects such as eye redness, and a drying sensation. On the contrary, the wall material of the photonic crystal structures preferably has a low water content. When wall material of the photonic crystal structures is a polymer having a high water content, the volume expansion may occur during hydration to destruct the opal structure or the inverse opal structure, thereby causing shifting of a certain wavelength region of reflected light. Therefore, in order to allow a user to have a high wearing sensation and simultaneously realize reflection of light in the certain wavelength region, it is desirable that the hydrogel serving as the lens material has a high water content, and the photonic crystal structures have a low water content.

The water content of the hydrogel serving as the lens material of the soft contact lens may be greater than or equal to 35%, preferably 40%, or 50%, and may be less than or equal to 80%. Meanwhile, the water content of the wall material of the photonic crystal structures may be in a range of 0 to 30%, particularly a range of 0 to 20%, and more particularly a range of 0 to 10%. The polymer included in the wall material may be a polymer having a non-swelling property in water, preferably a non-swelling cross-linked polymer.

More specifically, a ratio of the water content of the hydrogel serving as the lens material and the water content of the wall material of the photonic crystal structures may be in a range of 1.3 to 100, particularly a range of 2 to 50, and more particularly a range of 5 to 50.

The contact lens for correction of color weakness according to one embodiment of the present invention may have an oxygen permeability (Dk) of 50 or more. Preferably, an oxygen permeability (Dk) of the soft contact lens may be preferably greater than or equal to 70 or 100, and may be less than 150.

When the contact lens for correction of color weakness according to one embodiment of the present invention is a soft contact lens, the soft contact lens has the asymmetric water content as described above. As result, the water content of the contact lens may be greater than or equal to 35%. Preferably, the water content of the contact lens may be greater than or equal to 50% or 60%, and may be less than 80%.

According to one embodiment of the contact lens for correction of color weakness according to the present invention, the photonic crystal structures may have substantially spherical particles or spherical pores regularly arranged therein, and the spherical particles or spherical pores may have a diameter of 50 nm to 500 nm.

According to one specific embodiment, when the photonic crystal structures are opal structures, the diameter of the spherical particles 34 should vary depending on the certain wavelength region of light reflected by the photonic crystal structures 30. In general, the Bragg's diffraction equation (Equation 1) in the lattice arranged in a face-centered cubic configuration may be useful in estimating the wavelengths of reflected light.

According to still another specific embodiment, when the photonic crystal structures are inverse opal structures, the diameter of the spherical pores 34 should vary depending on the certain wavelength region of light reflected by the photonic crystal structures 30. In general, Bragg's diffraction equation (Equation 1) in the lattice arranged in a face-centered cubic configuration may be useful in estimating the wavelengths of reflected light.

[Equation 1]

$$\lambda = 2dn_{eff} = \left(\frac{\pi}{3\sqrt{2\phi}}\right)^{\frac{1}{3}} \left(\frac{8}{3}\right)^{\frac{1}{2}} D \left(n_p^2 \phi + n_m^2(1-\phi)\right)^{\frac{1}{2}}$$

wherein $\phi$ is a volume fraction of spherical particles or spherical pores, D is a diameter of the spherical particles or spherical pores, $n_p$ is an index of refraction of the spherical particles or spherical pores, and $n_m$ is an index of refraction of a wall material of the photonic crystal structures. For example, when the wall material of the photonic crystal structures is composed of ETPTA (n = 1.471), a volume fraction of the spherical particles or spherical pores (n = 1) is 33% by volume, and a diameter of the spherical particles or spherical pores 34 is in a range of 120 nm to 155 nm, the photonic crystal structures reflect visible rays in a wavelength region of 480 nm to 520 nm, at which it is possible to distinguish between blue and green colors. On the other hand, when the diameter of the spherical particles or spherical pores 34 is in a range of 156 nm to 177 nm, the photonic crystal structures reflect visible rays in a wavelength region of 560 to 600 nm, at which it is possible to distinguish between green and red colors. Also, when the diameter of the spherical particles or spherical pores 34 is in a range of 178 nm to 210 nm, the photonic crystal structures reflect visible rays in a wavelength region of 630 nm to 670 nm, at which it is possible to clearly distinguish red color.

When the diameter of the spherical particles or spherical pores 34 is less than 50 nm, the wavelengths of light reflected by the spherical particles or spherical pores may become shorter than those of a region of visible rays, which make it impossible to properly distinguish the colors. On the other hand, when the diameter of the spherical particles or spherical pores 34 is greater than 500 nm, the wavelengths of light reflected by the spherical particles or spherical pores may become shorter than those of the region of visible rays, which make it impossible to properly distinguish the colors. In general, when the spherical particles or spherical pores 34 are arranged in a face-centered cubic configuration in the photonic crystal structures 30, a gap between the spherical particles or spherical pores 34 may be physically maintained at a diameter approximately 0.2-fold to 0.5-fold higher than that of the spherical particles or spherical pores 34. The gap between the spherical particles or spherical pores 34 may be determined by the size and volume fraction of the colloidal particles mixed to form the spherical particles or spherical pores 34.

The contact lens for correction of color weakness according to one embodiment of the present invention may be configured so that each of the optical zone and the annular peripheral zone adjacent to the optical zone can have substantially the same curved path in a central direction of the optical zone upon water swelling.

More specifically, when the optical zone and the annular peripheral zone have different water contents, local stress may occur during the hydrating or swelling of the contact lens. As one example, because the photonic crystal structures having a low water content are included in the optical zone of the contact lens and the hydrogel having a high water content is included in the annular peripheral zone, stress is caused at the interface between the optical zone and the annular peripheral zone due to a difference in water content between the hydrogel and the photonic crystal structures. Because such stress causes bending or deformation at the interface between the optical zone and the annular peripheral zone, it is impossible to obtain a smooth hemispherical contact lens. However, the contact lens for correction of color weakness according to one embodiment of the present invention is positioned so that a plurality of photonic crystals can be dispersed in the optical zone, thereby minimizing stress at the interface between the optical zone and the annular peripheral zone. Therefore, a smooth hemispherical contact lens may be obtained without any bending or deformation at the interface between the optical zone and the annular peripheral zone. That is, although the water content of the hydrogel serving as the lens material is higher than the water content of the photonic crystal structures in the contact lens for correction of color weakness according to the present invention, the contact lens is not bent or deformed. Therefore, the optical zone and the annular peripheral zone adjacent to the optical zone may have substantially the same curved path in a central direction of the optical zone upon the swelling.

According to one embodiment of the contact lens for correction of color weakness according to the present invention, when the lens material is a soft contact lens, hydrogels having a high water content may be used as the lens material. When the optical zone includes the photonic crystal structures, the center of the optical zone may have a stiffness value of 5 psi.mm² or less, and the annular peripheral zone may have a stiffness value of 1 psi.mm² or less when the annular peripheral zone includes the hydrogel having a high water content. More particularly, the annular peripheral zone may have a stiffness value of 4 psi.mm² or less, and more preferably 2 psi.mm² or less, and may have a stiffness value of 0.05 psi.mm² or more. The annular peripheral zone may have a stiffness value of 0.8 psi.mm² or less, and more preferably 0.5 psi.mm² or less, and may have a stiffness value of 0.05 psi.mm² or more.

When the contact lens for correction of color weakness according to one embodiment of the present invention is a soft contact lens having excellent flexibility, the stiffness value of the annular peripheral zone may be higher than the stiffness value of the center of the optical zone. The stiffness refers to a value measured on the contact lens for correction of color weakness after the water content of the contact lens for correction of color weakness reaches the equilibrium water content at room temperature. In this case, the stiffness may be obtained by multiplying the Young modulus by the product of thickness of a lens at a certain point. As one example, the stiffness of the center of the optical zone may be obtained by calculating the product of the thickness of a lens at the center of the optical zone, and multiplying the Young modulus of the lens by the product of the thickness of the lens.

One embodiment of the contact lens for correction of color weakness according to the present invention may further include an additive, when necessary. In this case, the additive may include a coloring agent, an ultraviolet (UV) blocking agent, a UV sunscreen agent, and the like. The contact lens for correction of color weakness according to the present invention may realize a characteristic of distinguishing the colors without using a coloring agent such as a dye or a pigment. However, it should not be understood that the contact lens for correction of color weakness according to the present invention excludes the coloring agent. According to one specific embodiment, an aspect of the color contact lens, which includes one or plurality of photonic crystal structures dispersed in the optical zone and further includes a color pattern printed on some or all of the optical zone and the annular peripheral zone using the coloring agent, also falls within the scope of the present invention.

Further, the present invention provides a method of preparing a contact lens for correction of color weakness.

The method of preparing a hard contact lens for correction of color weakness according to one embodiment of the present invention includes: (a) forming a groove in one surface of a base material for hard contact lenses; (b) filling the groove with a colloidal dispersion including colloidal particles and a multifunctional monomer; and (c) curing the colloidal dispersion to form photonic crystal structures.

In the step (a), the base material for hard contact lenses is prepared by polymerizing a polymerizable composition for preparing an acrylic polymer, and may be provided in a contact lens shape, or provided in a button shape before lens molding. However, materials known to prepare a lens material of the hard contact lens, and shapes thereof are not particularly limited. When the groove is formed in one surface of the base material for hard contact lenses, the shape and number of the grooves are not particularly limited, but the groove may be formed in a shape selected from a hemispherical shape, and a polygonal shape.

The step (b) includes filling the groove with the colloidal dispersion including colloidal particles and a multifunctional monomer. In this case, the groove refers to a position corresponding to the optical zone of the contact lens. The colloidal dispersion may be self-assembled by an electrostatic repulsive force, or assembled by means of a precipitation method to induce a regular arrangement, but this is just one embodiment, and the present invention is not limited thereto. In this case, methods known in the related art for inducing the regular arrangement of the colloidal particles may be used without any limitation.

In the step (c), when the colloidal dispersion with which the groove is filled is cured, the multifunctional monomer included as a medium may be cured to fix the colloidal crystals with the wall material, and the photonic crystal structures may be prepared accordingly.

The curing reaction may be a thermosetting reaction using a thermal initiator, or a photocuring reaction using a photoinitiator. Preferably, the curing reaction may be a photocuring reaction.

The photonic crystal structures obtained through the curing reaction may be in a lamellar or hemispherical shape having a thickness of 1 μm to 50 μm, and the colloidal particles may be stacked in five or more layers in a direction of depth (d2) of the photonic crystal structures. Also, the photonic crystal structures may have an in-plane long-axis diameter of 10 μm to 1,000 μm, and the plurality of photonic crystal structures may have the same or different long-axis diameters.

In any one or two or more steps selected from the steps (a) to (c) of the method of preparing a hard contact lens for correction of color weakness according to one embodiment of the present invention, the shape of the hard contact lens may be adjusted through a process of cutting the base material for hard contact lenses. The cutting procedure may be specifically performed using a surface lathe cutting method, but the present invention is not limited thereto.

The method of preparing a soft contact lens for correction of color weakness according to one embodiment of the present invention includes: (A) preparing a colloidal dispersion including colloidal particles and a multifunctional monomer; (B) forming regularly arranged colloidal crystals from the colloidal dispersion; (C) curing the colloidal crystals to prepare photonic crystal structures; (D) positioning the photonic crystal structures in a central region of a mold and filling the mold with a polymerizable composition; and (E) curing the polymerizable composition so that the photonic crystal structures are encapsulated into an optical zone, which is a lens center, using a lens material.

In the step (A), the colloidal particles may be preferably monodispersed colloidal particles, and may be substantially spherical particles. The colloidal particles may be polymer particles or inorganic particles, and may have a diameter of 50 nm to 500 nm. The multifunctional monomer may be dissolved in a solvent, or may be used alone without using a solvent. In this case, the multifunctional monomer may be used as a medium to form a dispersion including the colloidal particles at a concentration of 5 to 60% by volume. Preferably, the colloidal particles may be included at 10 to 50% by volume, more preferably 20 to 40% by volume.

The medium including the multifunctional monomer may further include a thermal initiator or a photoinitiator for a subsequent curing reaction, and preferably may further include a photoinitiator.

In the step (B), the colloidal dispersion may be self-assembled by an electrostatic repulsive force to induce a regular arrangement, or self-assembled by means of a precipitation method to induce a regular arrangement, but this is just one embodiment, and the present invention is not limited thereto. In this case, methods known in the related art for inducing the regular arrangement of the colloidal particles may be used without any limitation.

In the step (C), when the regularly arranged colloidal crystals are obtained, the multifunctional monomer included as the medium may be cured to fix the colloidal crystals with the wall material, and the photonic crystal structures may be prepared accordingly.

The curing reaction may be a thermosetting reaction using a thermal initiator, or a photocuring reaction using a photoinitiator. Preferably, the curing reaction may be a photocuring reaction.

The photonic crystal structures obtained through the curing reaction may be in a lamellar or hemispherical shape having a thickness of 1 $\mu$m to 50 $\mu$m, and the colloidal particles may be stacked in five or more layers in a direction of depth (d2) of the photonic crystal structures. Also, the photonic crystal structures may have an in-plane long-axis diameter of 10 $\mu$m to 1,000 $\mu$m, and the plurality of photonic crystal structures may have the same or different long-axis diameters.

The step (D) includes disposing the photonic crystal structures at a certain position in the mold and filling the mold with a polymerizable composition for preparing an acrylic polymer. Specifically, the step (D) includes disposing the photonic crystal structures in a central region of the mold, and filling the mold with a polymerizable composition for preparing an acrylic polymer. In this case, the central region of the mold refers to a position corresponding to the optical zone of the contact lens. Preferably, the photonic crystal structures may be disposed at a certain corresponding position in the mold so that the photonic crystal structures can be positioned in the optical zone that is the center of the contact lens. Then, the mold may be filled with the polymerizable composition for preparing an acrylic polymer. In this case, a gap g between the neighboring photonic crystal structures may be in a range of 10 $\mu$m to 500 $\mu$m.

The polymerizable composition for preparing an acrylic polymer may be a polymerizable composition including one or more monomers containing a polymerizable functional group, and may be the acrylic polymer.

In the step (E), the contact lens for correction of color weakness according to the present invention may be prepared by curing the polymerizable composition for preparing an acrylic polymer, and the photonic crystal structures may be encapsulated into the lens material by means of the curing reaction. The curing reaction of the polymerizable composition may be carried out under initiation by heat or light, but this is just one embodiment, and the present invention is not limited thereto.

One embodiment of the method of preparing a contact lens for correction of color weakness according to the present invention may further include removing the colloidal particles from the photonic crystal structures after the step (C). The removal of the colloidal particles may be carried out after the step (C) and before the step (D), or may be carried out after the step (E) in which the contact lens is prepared.

The removal of the colloidal particles may be carried out by means of etching, dissolution using a solvent, or a thermal treatment. A number of pores may be formed in the wall material through the removal of the colloidal particles. According to one specific embodiment, when the colloidal particles are silica particles, only the silica particles may be selectively removed through HF etching.

As such, the contact lens for correction of color weakness according to the present invention has an effect of providing a contact lens for correction of color weakness capable of clearly distinguishing the colors by varying the size of the spherical particles or spherical pores dispersed in the photonic crystal structures. Also, when the photonic crystal structures are fixed with the wall material serving as the non-swelling cross-linked polymer to form a soft contact lens, the contact lens for correction of color weakness according to the present invention causes no wavelength shift with respect to visible rays in a certain wavelength region even when the hydrogel serving as the lens material is hydrated or swollen. In addition, when the plurality of photonic crystal structures are positioned to be spaced apart in the form of particles to form a soft contact lens, the contact lens for correction of color weakness according to the present invention may minimize the generation of local stress during the hydration or swelling of the hydrogel, thereby causing no bending or deformation at the shape of the contact lens. Further, the contact lens for correction of color weakness according to the present invention has advantages in that the correction of color weakness may be realized through the photonic crystal structures, and the contact lens is fundamentally harmless to the human body because a chemical dye or pigment is not used.

Also, the contact lens for correction of color weakness according to the present invention has an advantage in that, because the contact lens may include the micro-pattern capable of realizing various colors without any dependence on the lens material, the lens material having both high water content and oxygen permeability may be used to achieve color weakness correction characteristics, high water content, and high oxygen permeability.

The contact lens for correction of color weakness including a micro-pattern in which the photonic crystal structures are dispersed according to the present invention will be described in further detail with reference to examples thereof. However, it should be understood that the following examples are just references for describing the present invention in detail, but are not intended to limit the present invention, which may be embodied in various forms.

Unless otherwise defined, all the technical and scientific terms have the same meaning as commonly understood by one of ordinary skill in the art to which the invention pertains. The terms used in the detailed description are intended to effectively describe the specific embodiments, and are not intended to limit the present invention.

Also, the units of additives which are not particularly described in this specification may be a percent (%) by weight.

[Measurement method of properties]

1. Water content

The water content (%) was estimated using Equation 2 below by measuring a weight of a dry contact lens, and a weight of a contact lens, which was swollen after immersion in 0.9% by weight of an aqueous sodium chloride (NaCl) solution for 24 hours. That is, the water content was estimated as a ratio of a weight ($W_{swell}$) of the swollen contact lens with respect to a weight ($W_{dry}$) of the dry contact lens.

$$[\text{Equation 2}]$$

$$\text{Water content (\%)} = (W_{swell} - W_{dry}) \; / \; W_{dry} \times 100$$

[Example 1]

Silica particles having an average diameter of 150 nm, prepared using a Stober method, were dispersed at a volume fraction of 30% in trimethylolpropane ethoxylate triacrylate (ETPTA), and 2-hydroxy-2-methyl-1-phenyl-1-propanone as a photoinitiator was further added at a content of 0.3% by weight, based on the total weight of the resulting mixture, and then dispersed to prepare a colloidal dispersion.

Next, a polymerizable composition was prepared as a polymerizable composition for preparing a hard contact lens by dispersing methyl methacrylate as a monomer, ethylene glycol dimethacrylate (EGDMA) as a cross-linking agent, and azobisisobutyronitrile (AIBN) as an initiator at a weight fraction of 98%, 1%, and 1%, respectively. The polymerizable composition was polymerized while shaking at 70°C for an hour and at 120°C for 3 hours, put into a rod-shaped mold, and then cooled to prepare a polymer rod. The polymer rod was cut to prepare polymer buttons. The polymer buttons were subjected to a surface lathe cutting procedure to form a groove, which had a diameter of 4 mm and a depth of 12 $\mu$m, in one surface of each of the polymer buttons. The polymer buttons having the groove formed therein were filled with 50 $\mu$L of the colloidal dispersion, and the colloidal dispersion was cured by irradiation with UV rays at a luminous intensity of 200 mW/cm$^2$ for 10 seconds to form photonic crystal structures in the polymer buttons. Additionally, the photonic crystal structures were finally subjected to a surface lathe cutting procedure to finish the contact lens for correction of color weakness.

The prepared contact lens for correction of color weakness clearly distinguished between blue and green colors, and thus was able to be used as a cyan contact lens for correction of color weakness.

[Example 2]

A contact lens for correction of color weakness was prepared in the same manner as in Example 1, except that silica particles having an average diameter of 175 nm were used.

The prepared contact lens for correction of color weakness clearly distinguished between red and green colors, and thus was able to be used as a red-green contact lens for correction of color weakness.

[Example 3]

A contact lens for correction of color weakness was prepared in the same manner as in Example 1, except that silica particles having an average diameter of 200 nm were used.

The prepared contact lens for correction of color weakness clearly distinguished a red color, and thus was able to be used as a red contact lens for correction of color weakness.

[Example 4]

Silica particles having an average diameter of 150 nm, prepared using a Stober method, were dispersed at a volume fraction of 30% in ethoxylated trimethylolpropane ethoxylate triacrylate (ETPTA), and 2-hydroxy-2-methyl-1-phenyl-1-propanone as a photoinitiator was dispersed at 0.3% by weight, based on the total weight of the resulting mixture, and then dispersed to prepare a colloidal dispersion. Then, the colloidal dispersion was applied on an engraved plate having an engraved portion in which a particle pattern in a hemispherical shape was engraved to a depth of 5 $\mu$m, and the portions other than the engraved portion were then subjected to a blading treatment. The pattern was transferred onto a lower contact lens mold from the engraved plate using a stamp, and cured by irradiation with UV rays at a luminous intensity of 200 mW/cm$^2$ for 10 seconds to prepare photonic crystal structures.

As described above, each of the photonic crystal structures prepared using the silica particles having an average diameter of 175 nm, and the photonic crystal structures prepared using the silica particles having an average diameter of 200 nm were prepared.

The photonic crystal structures prepared using the silica particles having an average diameter of 150 nm, the photonic crystal structures prepared using the silica particles having an average diameter of 175 nm, and the photonic crystal structures prepared using the silica particles having an average diameter of 200 nm were mixed at a weight ratio of 1:1:1, and positioned in the polymer buttons prepared by the method of Example 1, in which a groove was formed to have a diameter of 4 mm and a depth of 12 $\mu$m.

Next, the polymer button filled with the photonic crystal structures was filled with the polymerizable composition of Example 1, and the polymerizable composition was then cured by irradiation with UV rays at a luminous intensity of 200 mW/cm$^2$ for 10 seconds to form photonic crystal structures in the polymer button. Additionally, the photonic crystal structures were finally subjected to a surface lathe cutting procedure to finish the contact lens for correction of color weakness. In the other procedures, the contact lens for correction of color weakness was prepared in the same manner as in Example 1.

The prepared contact lens for correction of color weakness clearly distinguished between red, blue and green colors, which makes it possible to clearly distinguish all of these colors, and thus was remarkable as the contact lens for correction of color weakness.

[Example 5]

A contact lens for correction of color weakness was prepared in the same manner as in Example 1, except that silica particles having an average diameter of 40 nm were used.

It was confirmed that it was difficult for the prepared contact lens for correction of color weakness to distinguish between red, green, and blue colors.

[Example 6]

A contact lens for correction of color weakness was prepared in the same manner as in Example 1, except that silica particles having an average diameter of 600 nm were used.

It was confirmed that it was difficult for the prepared contact lens for correction of color weakness to distinguish between red, green, and blue colors.

[Example 7]

Silica particles having an average diameter of 150 nm, prepared using a Stober method, were dispersed at a volume fraction of 30% in trimethylolpropane ethoxylate triacrylate (ETPTA), and 2-hydroxy-2-methyl-1-phenyl-1-propanone as a photoinitiator was further added at 0.3% by weight, based on the total weight of the resulting mixture, and dispersed. Thereafter, the dispersed solution was applied on an engraved plate having an engraved portion in which a particle pattern in a hemispherical shape was engraved to a depth of 12 $\mu$m, and the portions other than the engraved portion were then subjected to a blading treatment. The pattern was transferred onto a lower contact lens mold from the engraved plate using a stamp, and then cured by irradiation with UV rays at a luminous intensity of 200 mW/cm$^2$ for 10 seconds to prepare photonic crystal structures. In this case, the water content of the wall material of the prepared photonic crystal structures was 1.2%.

2-Hydroxyethyl methacrylate (HEMA) as a monomer for preparing a hydrogel of a soft contact lens, and ethylene glycol dimethacrylate (EGDMA) as a cross-linking agent were dispersed at a weight fraction of 95% and 5%, respectively, to prepare a polymerizable composition for preparing a hydrogel. Then, 2-hydroxy-2-methyl-1-phenyl-1-propanone was further added at 0.3% by weight, based on the total weight of the polymerizable composition, and dispersed. The photonic crystal structures were positioned in a central region of a lower contact lens mold. 50 $\mu$L of the polymerizable composition was dropped on the lower contact lens mold in which the photonic crystal structures were positioned, and the upper contact lens mold was then covered. Thereafter, the polymerizable composition was cured by irradiation with UV rays at a luminous intensity of 200 mW/cm$^2$ for 50 seconds. Then, the upper contact lens mold was removed to finally obtain a contact lens for correction of color weakness. In this case, the water content of the hydrogel prepared from the polymerizable composition was 51%.

The prepared contact lens for correction of color weakness clearly distinguished between blue and green colors, and thus was able to be used as a cyan contact lens for correction of color weakness, and no bending or deformation occurred at the shape of the contact lens before swelling and even during swelling in water.

[Example 8]

This experiment was performed in the same manner as in Example 7, except that silica particles having an average diameter of 150 nm, prepared using a Stober method, were dispersed at a volume fraction of 30% in a mixture obtained by mixing trimethylolpropane ethoxylate triacrylate (ETPTA) and 2-hydroxyethyl methacrylate (HEMA) at a weight ratio of 1:1 in order to prepare the photonic crystal structures in Example 7, and 2-hydroxy-2-methyl-1-phenyl-1-propanone as a photoinitiator was further added at 0.3% by weight, based on the total weight of the resulting mixture, and dispersed. In this case, the water content of the wall material of the photonic crystal structures was 33%.

The prepared color contact lens showed a blue structural color before the swelling, but the structural color disappeared during the swelling in water.

[Comparative Example 1]

A dispersion, which was obtained by dispersing the silica particles having an average diameter of 150 nm, prepared using a Stober method, at a volume fraction of 30% in the polymerizable composition of Example 1, adding 0.3% by weight of 2-hydroxy-2-methyl-1-phenyl-1-propanone, based on the total weight of the polymerizable composition, and dispersing the 2-hydroxy-2-methyl-1-phenyl-1-propanone, but not the colloidal dispersion, was used for the groove as in Example 1. The other procedures were performed in the same manner as in Example 1, except that the groove was filled with the dispersion, and the dispersion was thermoset at 70°C for an hour and at 120°C for 3 hours.

Because the particles were not regularly arranged, the prepared contact lens for correction of color weakness did not reflect light in a wavelength region at which it is possible to distinguish between blue and green colors.

[Comparative Example 2]

2-Hydroxyethyl methacrylate (HEMA) as a monomer for preparing a hydrogel, and ethylene glycol dimethacrylate (EGDMA) as a cross-linking agent were dispersed at a weight fraction of 95 and 5%, respectively, to prepare a polymerizable composition for preparing a hydrogel. Thereafter, silica particles having an average diameter of 150 nm, prepared using a Stober method, were dispersed at volume fraction of 30% in the polymerizable composition, and 0.3% by weight of 2-hydroxy-2-methyl-1-phenyl-1-propanone was added, based on the total weight of the polymerizable composition, and then dispersed.

50 $\mu$L of the polymerizable composition including the silica particles was dropped on a lower contact lens mold, and an upper contact lens mold was then covered. Subsequently, the polymerizable composition was cured by irradiation with UV rays at a luminous intensity of 200 mW/cm$^2$ for 50 seconds. Then, the upper contact lens mold was removed to finally obtain a contact lens for correction of color weakness.

Because the particles were not regularly arranged, the prepared contact lens for correction of color weakness did not reflect light in a wavelength region at which it is possible to distinguish between blue and green colors, and the bending or deformation occurred during the swelling in water as well.

The contact lens for correction of color weakness according to the present invention has an advantage in that the contact lens can reflect light in a certain visible wavelength region, at which it is difficult to distinguish the three colors (i.e., red, green, and blue), to clearly identify the colors.

Also, the contact lens for correction of color weakness according to the present invention may have a high water-swelling property, and has an advantage in that no color distortion or change occurs even when the contact lens is swollen, and color weakness correction characteristics are maintained even after repeated wearing of the contact lens.

Further, the contact lens for correction of color weakness according to the present invention has an advantage in that the contact lens has excellent flexibility.

Although the present invention has been described with reference to preferred embodiments thereof, it should be understood that the present invention is not intended to be limiting, and various modifications and variations can be made to the present invention without departing from the scope of the present invention.

[Detailed Description of Main Elements]

10:    contact lens
20:    lens body
30:    photonic crystal structure
32:    wall material of photonic crystal structures
34:    spherical particles or spherical pores
d1:    diameter of photonic crystal structures
d2:    depth of photonic crystal structure
g:     gap between photonic crystal structures

**Claims**

1.  A contact lens for correction of color weakness comprising an optical zone, wherein the optical zone comprises:

    an acrylic polymer; and
    a micro-pattern in which one or plurality of photonic crystal structures included in the acrylic polymer are dispersed.

2.  The contact lens for correction of color weakness of claim 1, wherein the photonic crystal structures reflect visible rays in a wavelength region of 480 nm to 520 nm.

3.  The contact lens for correction of color weakness of claim 1, wherein the photonic crystal structures reflect visible rays in a wavelength region of 560 nm to 600 nm.

4.  The contact lens for correction of color weakness of claim 1, wherein the photonic crystal structures reflect visible rays in a wavelength region of 630 nm to 670 nm.

5.  The contact lens for correction of color weakness of claim 1, wherein the contact lens for correction of color weakness comprises a soft contact lens or a hard contact lens.

6.  The contact lens for correction of color weakness of claim 1, wherein the photonic crystal structures comprise opal or inverse opal structures.

7.  The contact lens for correction of color weakness of claim 1, wherein the photonic crystal structures are in a lamellar or hemispherical shape having a thickness of 1 $\mu$m to 50 $\mu$m.

8.  The contact lens for correction of color weakness of claim 1, wherein the photonic crystal structures have substantially spherical particles or spherical pores regularly arranged therein, and a wall material of the photonic crystal structures comprises a polymer having a water content of 0 to 30%.

9.  The contact lens for correction of color weakness of claim 8, wherein the wall material of the photonic crystal structures comprises a cross-linked polymer which is not swellable in water.

10. The contact lens for correction of color weakness of claim 8, wherein the polymer of the wall material is prepared by polymerizing a monomer composition comprising 50 mol% or more of a multifunctional monomer containing two or more polymerizable functional groups, based on the total mole of the monomer in the monomer composition.

11. A contact lens for correction of color weakness comprising:

    an optical zone through which a contact lens wearer's line of vision passes and which comprises one or plurality of photonic crystal structures; and
    an annular peripheral zone surrounding the optical zone,
    wherein the one or plurality of photonic crystal structures are encapsulated with a lens material.

12. The contact lens for correction of color weakness of claim 11, wherein the photonic crystal structures have an in-plane long-axis diameter of 10 $\mu$m to 1,000 $\mu$m, and the plurality of photonic crystal structures have the same or different long-axis diameters.

**13.** The contact lens for correction of color weakness of claim 11, wherein a gap between the photonic crystal structures is in a range of 10 $\mu$m to 500 $\mu$m.

**14.** A method of preparing a hard contact lens for correction of color weakness, the method comprising:

(a) forming a groove in one surface of a base material for hard contact lenses;
(b) filling the groove with a colloidal dispersion comprising colloidal particles and a multifunctional monomer; and
(c) curing the colloidal dispersion to form photonic crystal structures.

**15.** A method of preparing a soft contact lens for correction of color weakness, the method comprising:

(A) preparing a colloidal dispersion comprising colloidal particles and a multifunctional monomer;
(B) forming regularly arranged colloidal crystals from the colloidal dispersion;
(C) curing the colloidal crystals to prepare photonic crystal structures;
(D) positioning the photonic crystal structures in a central region of a mold and filling the mold with a polymerizable composition; and
(E) curing the polymerizable composition so that the photonic crystal structures are encapsulated into an optical zone, which is a lens center, using a lens material.

FIG. 1

FIG. 2

10

20

30

FIG. 3

10

30

20

FIG. 4

FIG. 5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 463 001 A (SHENZHEN INST OF ADV TECH CAS) 12 December 2017 (2017-12-12) | 1,5,6, 11,15 | INV. G02C7/04 |
| Y | * paragraph [0005] - paragraph [0040] * <br> * paragraph [0042] - paragraph [0091]; figure 1 * | 1-15 | G02C7/10 |
| X | CN 207 232 560 U (SHENZHEN INST ADV TECH) 13 April 2018 (2018-04-13) | 11 | |
| Y | * paragraph [0005] - paragraph [0013] * <br> * paragraph [0016] - paragraph [0025]; figure 1 * | 1-15 | |
| Y | JP 2015 118156 A (ADACHI AKIRA; SHIRAI TOSHIAKI) 25 June 2015 (2015-06-25) <br> * paragraph [0015] - paragraph [0026]; figures 1-4 * | 1-15 | |
| Y | CN 102 193 213 A (UNIV SOUTHEAST) 21 September 2011 (2011-09-21) <br> * paragraph [0004] - paragraph [0040] * <br> * paragraph [0044] - paragraph [0077]; figures 1, 2 * | 1-15 | TECHNICAL FIELDS SEARCHED (IPC) <br><br> G02C |
| Y | WO 2017/028551 A1 (SHENZHEN INST OF ADVANCED TECH CHINESE ACAD OF SCIENCES (CAS) [CN]) 23 February 2017 (2017-02-23) <br> * page 6, line 5 - page 11, line 5; figures 1-3 * <br> * page 2, line 4 - page 5, line 17 * | 1-15 | |
| Y | WO 95/05621 A1 (ABRAHAM GYOERGY [HU]; WENZEL GOTTFRIEDNE [HU]; SZAPPANOS JANOS [US]) 23 February 1995 (1995-02-23) <br> * page 8, line 29 - page 17, line 6; figures 1-17; example 4 * | 1-15 | |

-/--

The present search report has been drawn up for all claims

| Place of search | Date of completion of the search | Examiner |
|---|---|---|
| Munich | 17 December 2019 | Bratfisch, Knut |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

## EUROPEAN SEARCH REPORT

Application Number

EP 19 17 9372

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 92/12451 A1 (CHROM CORP X [US]) 23 July 1992 (1992-07-23) * page 3, line 7 - page 4, line 12; figures 1-3 * ----- | 1-15 | |
| Y | US 5 574 517 A (PANG FRANCIS K W [CA] ET AL) 12 November 1996 (1996-11-12) * column 3, line 3 - column 4, line 65 * ----- | 1-15 | |

TECHNICAL FIELDS
SEARCHED      (IPC)

The present search report has been drawn up for all claims

| Place of search | Date of completion of the search | Examiner |
|---|---|---|
| Munich | 17 December 2019 | Bratfisch, Knut |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 19 17 9372

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2019

| Patent document cited in search report | | Publication date | Patent family member(s) | | Publication date |
|---|---|---|---|---|---|
| CN 107463001 | A | 12-12-2017 | NONE | | |
| CN 207232560 | U | 13-04-2018 | NONE | | |
| JP 2015118156 | A | 25-06-2015 | NONE | | |
| CN 102193213 | A | 21-09-2011 | NONE | | |
| WO 2017028551 | A1 | 23-02-2017 | CN | 105116564 A | 02-12-2015 |
| | | | WO | 2017028551 A1 | 23-02-2017 |
| WO 9505621 | A1 | 23-02-1995 | AU | 4980193 A | 14-03-1995 |
| | | | CA | 2169771 A1 | 23-02-1995 |
| | | | EP | 0716758 A1 | 19-06-1996 |
| | | | JP | 3246604 B2 | 15-01-2002 |
| | | | JP | H09503402 A | 08-04-1997 |
| | | | TW | 222024 B | 01-04-1994 |
| | | | US | 5774202 A | 30-06-1998 |
| | | | WO | 9505621 A1 | 23-02-1995 |
| WO 9212451 | A1 | 23-07-1992 | NONE | | |
| US 5574517 | A | 12-11-1996 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190001278
- US 3586423 A
- US 3701590 A
- US 4300819 A
- US 4775520 A